# FASCICULE DE BREVET EUROPEEN

(11) **EP 1 590 218 B1**
(45) Date de publication et mention de la délivrance du brevet: **13.06.2007**
(21) Numéro de dépôt: 04708784.6
(22) Date de dépôt: 06.02.2004
(51) Int. Cl.: B60T 7/12, B60T 13/74, B60T 13/66

(54) **PROCEDE DE COMMANDE DU DISPOSITIF DE FREINAGE STATIQUE D'UN VEHICULE AUTOMOBILE**
STEUERUNGSVERFAHREN DER FESTSTELLBREMSE FÜR EIN FAHRZEUG
METHOD FOR CONTROLLING THE STATIC BRAKING UNIT OF A MOTOR VEHICLE

(30) Priorité: 07.02.2003 FR 0301488
(43) Date de publication de la demande: 02.11.2005
(73) Titulaire: Peugeot Citroën Automobiles S.A., 78943 Vélizy Villacoublay (FR)
(72) Inventeur: HERNETTE, Vincent, F-75014 Paris (FR); BAILLEUX, François, F-91400 Val d'Albian (FR); ABADIE, Vincent, F-78500 Sartrouville (FR)
(74) Mandataire: Thinat, Michel
(86) Numéro de dépôt international: PCT/FR2004/000281
(87) Numéro de publication internationale: WO 2004/071828

(56) Documents cités:
- DE-A- 4 218 717
- DE-A- 10 104 498
- GB-A- 2 342 967
- PATENT ABSTRACTS OF JAPAN vol. 2000, no. 11, 3 janvier 2001 (2001-01-03) -& JP 2000 219108 A (FUJITSU TEN LTD), 8 août 2000 (2000-08-08)

## Description

La présente invention concerne un procédé de gestion de l'état et du fonctionnement d'un véhicule automobile, ainsi que le système pour la mise en oeuvre de ce procédé.

On assiste actuellement à une automatisation croissante des véhicules automobiles dans le but d'augmenter la sécurité et le confort de ceux-ci.

Il en est ainsi en ce qui concerne le remplacement du levier de frein à main actionné manuellement par le conducteur dans le sens de desserrage des freins du véhicule pour un démarrage en côte de celui-ci par un dispositif de freinage statique du véhicule pouvant être commandé par le conducteur en actionnant un élément de commande, tel qu'un interrupteur, situé par exemple au tableau de bord du véhicule.

Cependant, les procédé et système connus jusqu'à maintenant pour réaliser le démarrage en côte des véhicules n'utilisent que la pression exercée par le conducteur sur la pédale de frein et n'assure ainsi pas une fonction d'aide au démarrage du véhicule.

Le document DE 42 18 717 A décrit un procédé de gestion de l'état et du fonctionnement d'un véhicule automobile comprenant un dispositif de freinage statique, un dispositif de freinage dynamique, et une boîte de vitesses manuelle, ledit procédé consistant, pour faire repartir le véhicule en montée alors qu'il est immobilisé à l'arrêt par activation du dispositif de freinage statique, à désactiver le dispositif de freinage statique pour diminuer progressivement la pression de freinage du véhicule dès enfoncement de la pédale d'accélérateur et au fur et à mesure que le couple moteur augmente jusqu'à atteindre une valeur permettant au véhicule de repartir sans recul.

Cependant, ce procédé connu ne permet pas de distinguer le cas d'accélération à vide des cas d'accélération sous charge du véhicule.

La présente invention a pour but d'éliminer les inconvénients ci-dessus des systèmes connus.

A cet effet, l'invention propose un procédé tel que défini dans la revendication 1.

Le procédé consiste également, dans le cas d'un départ en montée du véhicule, à réaliser la désactivation du dispositif de freinage statique pour diminuer progressivement la pression de freinage du véhicule lorsque le couple moteur croît en fonction d'une information fournie par au moins un capteur de débattement de suspension de roue de véhicule.

Le procédé est également caractérisé en ce qu'il consiste, pour un véhicule à traction avant avec le dispositif de freinage statique agissant sur les roues de train arrière du véhicule, à détecter par au moins un capteur de déplacement relatif d'une roue arrière par rapport à la caisse du véhicule suffisante pour maintenir le véhicule à l'arrêt dès désactivation du dispositif de freinage statique puis propulser le véhicule.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est un schéma illustrant des composants d'un véhicule automobile auquel peut s'appliquer le procédé de l'invention ;
- la figure 2 représente sous forme de schéma-blocs l'architecture du système de l'invention permettant de gérer l'état et le fonctionnement d'un véhicule automobile doté d'un dispositif de freinage dynamique et d'un dispositif de freinage statique ;
- les figures 3A et 3B représentent deux chronogrammes permettant d'expliquer le départ en montée normale ou rapide d'un véhicule automobile ;
- les figures 4A et 4B représentent deux chronogrammes permettant d'expliquer un départ en montée lent d'un véhicule automobile ;
- les figures 5A et 5B représentent deux chronogrammes permettant d'expliquer le départ en descente d'un véhicule par l'accélérateur de celui-ci ;
- les figures 6A et 6B représentent deux chronogrammes permettant d'expliquer le départ en descente d'un véhicule avec une pression de frein suffisante exercée par le conducteur ;
- les figures 7A et 7B représentent deux chronogrammes permettant d'expliquer le départ en descente d'un véhicule avec pression de frein insuffisante, puis suffisante exercée par le conducteur du véhicule ; et
- les figures 8A et 8B représentent deux chronogrammes permettant d'expliquer le départ en descente d'un véhicule avec pression de frein insuffisante exercée par le conducteur de ce véhicule.

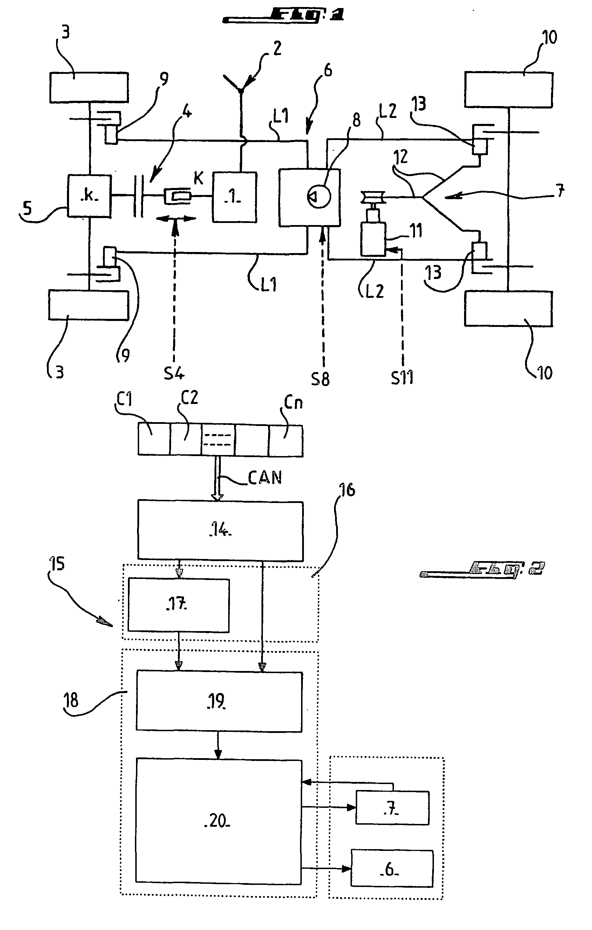

Le véhicule automobile tel que représenté en figure 1 est équipé d'un moteur 1 commandé par une pédale d'accélérateur 2.

Le moteur 1 développe un couple moteur K dont l'intégralité ou dont une fraction k peut être transmis aux roues motrices 3 par l'intermédiaire d'un embrayage 4 et d'un système de transmission 5, l'embrayage 4 pouvant être constitué par un embrayage piloté de façon automatique par un signal S4.

Le procédé et le système de l'invention s'appliquent à un véhicule équipé d'un dispositif de freinage dynamique 6 et d'un dispositif de freinage statique 7, chacun de ces dispositifs pouvant être commandé par une source d'énergie indépendante de l'énergie musculaire du conducteur.

De préférence, le dispositif de freinage dynamique 6 comprend une pompe électro-hydraulique 8 commandée par un signal S8 et susceptible d'alimenter en liquide de frein sous pression des récepteurs 9 (étriers) de frein hydraulique à étriers de freins pour disques de frein, associés respectivement aux roues motrices avant 3 et roues arrière 10, les liaisons de la pompe 8 aux récepteurs de frein hydraulique 9 et 13 associés aux roues motrices 3 et arrière 10 étant représentées en L1 et L2. Les électrovannes reliant la pompe 8 au récepteur 9 de frein hydraulique et formant un modulateur hydraulique connu en soi ne sont pas représentées pour des raisons de simplicité.

Le dispositif de freinage statique 7 comprend un motoréducteur électrique 11 commandé par un signal S11 et pouvant entraîner au moins un câble 12 propre à actionner un frein de parking 13 agissant sur les roues arrière 10 du véhicule.

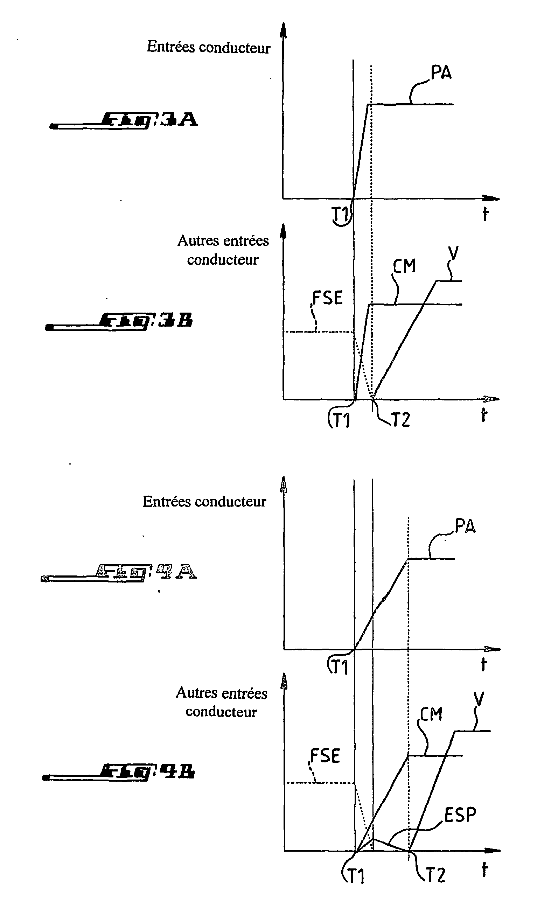

Selon l'invention, le système de gestion de l'état et du fonctionnement du véhicule comprend de manière générale, comme représenté en figure 2, une pluralité de capteurs C1, C2, ..., Cn qui sont embarqués sur le véhicule et qui permettent de mesurer des variables pour intervenir dans la dynamique de fonctionnement du véhicule et d'estimer, par calcul, d'autres variables non directement mesurées.

A titre d'exemple, les capteurs peuvent comprendre un capteur d'accélération ou de décélération longitudinal du véhicule, des capteurs de débattement des roues 3, 10 relativement à la caisse du véhicule, des capteurs de vitesse de rotation des roues, un capteur par roue pouvant être prévu, un inclinomètre de mesure de la pente sur laquelle se déplace le véhicule, un capteur de vitesse de déplacement du véhicule. Dans l'application particulière qui sera décrite ci-dessous de l'invention, ces capteurs peuvent également comporter un capteur de détermination du couple moteur en sortie de la boîte de vitesses du véhicule, des capteurs de détermination de l'effort de serrage des freins du véhicule par les dispositifs de freinage dynamique 6 et statique 7, un capteur de régime de fonctionnement du moteur et des capteurs de détection de point mort et de marche arrière du véhicule.

Les différents capteurs C1 à Cn sont reliés par l'intermédiaire d'un bus multiplexé du type CAN à un circuit 14 d'adaptation des signaux de sortie de ces capteurs pouvant comprendre notamment des moyens de filtrage des signaux.

Le circuit d'adaptation 14 est relié à un dispositif de pilotage 15 auquel sont transmis les différentes informations provenant des différents capteurs C1 à Cn et des informations représentatives de l'état de la pédale d'accélérateur 2 et de la pédale de frein (non représentée) du véhicule, de manière à déterminer à partir de ces informations l'état du véhicule et à calculer les consignes de freinage qui seront transmises au dispositif de freinage dynamique 6 et/ou au dispositif de freinage statique 7.

Le dispositif de pilotage 15 comprend un module de supervision 16 à bloc électronique 17 dont les fonctions sont notamment d'évaluer, à partir des capteurs C1 à Cn, la situation dynamique dans laquelle se trouve le véhicule, c'est-à-dire s'il roule sur du plat, en montée
ou en descente, en sens de marche avant ou de marche arrière, d'estimer la vitesse du véhicule avec précision à l'aide des capteurs de vitesse de rotation des roues de ce véhicule, et/ou d'estimer la pente sur laquelle se déplace le véhicule.

Le dispositif de pilotage 15 comprend également un contrôleur 18 dont le rôle est de déterminer l'état du véhicule à partir des informations provenant du bloc 17 ou à partir des informations provenant des capteurs C1 à Cn par l'intermédiaire du circuit d'adaptation 14, et de calculer des consignes de freinage par le bloc 20 du dispositif de pilotage 15 et qui sont transmises au dispositif de freinage piloté ou dynamique 6 et au dispositif de freinage statique 7.

Dans le but d'assister le conducteur pour faire repartir son véhicule en montée, sans recul du véhicule, alors que ce dernier est maintenu à l'arrêt par activation préalable du dispositif de freinage statique 7 sous la commande du dispositif de pilotage 15, ce dernier est programmé pour désactiver le dispositif de freinage statique 7 de manière à diminuer progressivement la pression de freinage du véhicule dès enfoncement de la pédale d'accélérateur 2 et au fur et à mesure que le couple moteur augmente jusqu'à atteindre une valeur permettant au véhicule de repartir sans recul.

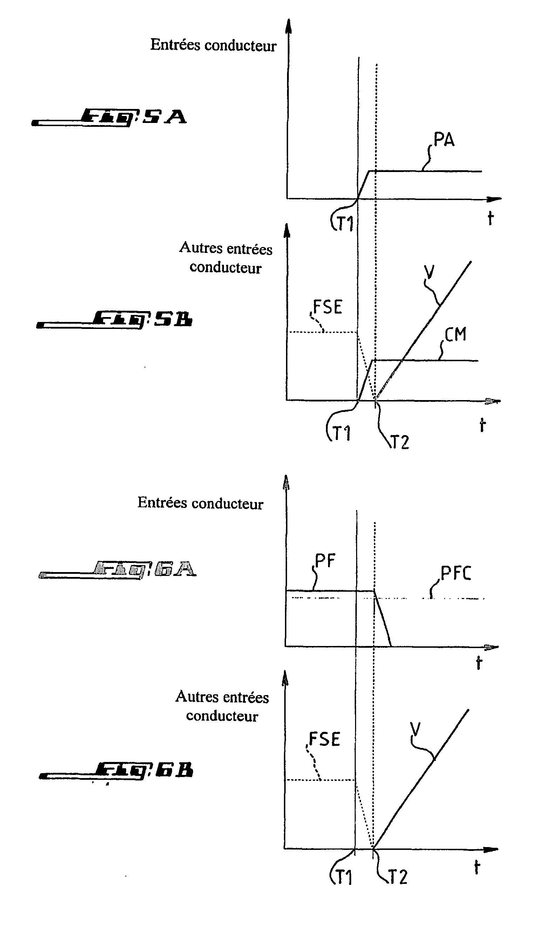

Cette situation est illustrée aux figures 3A et 3B, où la figure 3A représente la courbe PA d'enfoncement de la pédale d'accélérateur 2 et la figure 3B représente en pointillés la courbe FSE représentative de l'effort de serrage des freins du véhicule exercé par le dispositif de freinage statique 7, la courbe CM relative au couple moteur du véhicule pouvant être mesuré par le capteur en sortie de boîte de vitesses de ce véhicule, et la courbe V relative à la vitesse de déplacement du véhicule.

Ces figures sont relatives à un départ en montée normal ou rapide du véhicule et montrent que dès enfoncement à l'instant T1 de la pédale d'accélérateur 2, l'effort de serrage FSE du frein du véhicule par le dispositif de freinage statique 7 diminue progressivement au fur et à mesure qu'augmente le couple moteur jusqu'à ce qu'il atteigne une valeur de couple dès que l'effort de serrage devient nul au temps T2 pour permettre au véhicule de repartir en montée sans recul de celui-ci comme symbolisé par la courbe de vitesse V. Le desserrage des freins du véhicule est ainsi compensé par l'apparition du couple moteur.

Lorsque le couple moteur est insuffisant pour faire repartir le véhicule lors de la désactivation du dispositif de freinage statique 7 pour provoquer le desserrage progressif des freins du véhicule, le dispositif de pilotage 15 est également programmé pour activer le dispositif de freinage dynamique 6 de manière à assurer le maintien à l'arrêt du véhicule et désactiver le dispositif de freinage dynamique 6 dès que le couple moteur atteint une valeur suffisante permettant de faire repartir, sans recul, le véhicule en montée.

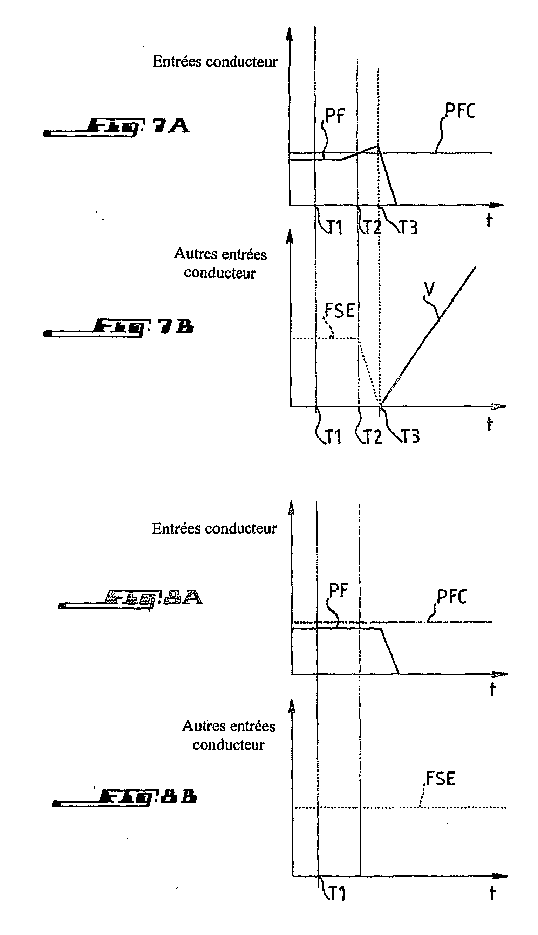

Cette situation est illustrée aux figures 4A et 4B dans le cas où le départ du véhicule en montée est lent ou hésitant. Ainsi, lorsqu'au temps T1 le conducteur a enfoncé la pédale d'accélérateur 2 de manière lente se traduisant par une évolution relativement lente à cet instant du couple moteur CM, on se trouve dans la situation suivant laquelle la valeur de ce couple moteur est insuffisante pour faire partir le véhicule alors que l'effort de freinage FSE est pratiquement nul. Pour éviter cet inconvénient, le dispositif de pilotage 15 permet de commander le dispositif de freinage dynamique 6 de manière que ce dispositif puisse appliquer une pression de freinage de maintien à l'arrêt du véhicule après que la pression de freinage exercée par le dispositif de freinage statique 7 est devenue nulle jusqu'à ce que le couple moteur atteigne une valeur suffisante pour permettre au véhicule de repartir en montée sans recul dès l'instant T2 comme symbolisé par la courbe de vitesse V. Cette façon de procéder permet donc de faire partir le véhicule afin de garantir un départ sans recul de celui-ci.

Le dispositif de pilotage 15 peut également être programmé, pour faire repartir le véhicule en descente alors que ce véhicule est immobilisé à l'arrêt par activation du dispositif de freinage statique 7, et ce dès enfoncement de la pédale d'accélérateur 2 et à condition qu'un rapport de vitesse soit engagé dans le sens de la descente, engagement de ce rapport qui peut être détecté par un capteur approprié déjà mentionné précédemment, de façon à désactiver le dispositif de freinage statique 7 pour diminuer progressivement la pression de freinage au fur et à mesure que le couple moteur augmente jusqu'à atteindre une valeur permettant au véhicule de repartir dans le sens de la descente.

Cette situation est reflétée par les figures 5A et 5B qui montrent que dès enfoncement de la pédale d'accélérateur 2 au temps T1 une fois un rapport de vitesse engagé dans le sens de la descente, le dispositif de freinage statique 7 est commandé par le dispositif de pilotage 15 pour desserrer les freins arrière du véhicule de façon progressive pendant que le couple moteur augmente et au temps T2 auquel la pression de freinage par le dispositif de freinage statique 7 devient nulle, le véhicule peut partir en descente à la vitesse V. Le conducteur doit ainsi montrer sa volonté de départ en descente du véhicule par engagement à la main du rapport de vitesse dans le sens de la descente et accélération du véhicule par enfoncement de la pédale d'accélérateur 2. La condition de rapport engagé dans le sens de la descente peut être réalisée par la sélection du point mort et. qui est alors détectée par le capteur de détection de point mort du levier de changement de vitesse du véhicule.

Les figures 6A et 6B représentent également une situation du déblocage du véhicule lorsque le conducteur souhaite faire partir en descente ce véhicule alors que ce dernier est maintenu à l'arrêt par le dispositif de maintien statique 7 après avoir engagé de lui-même le rapport de vitesse dans le sens de la descente et relâché la pédale de frein du véhicule après avoir enfoncé préalablement celle-ci jusqu'à la pression de maintien du véhicule dans la pente 2. Ceci permet au conducteur qui s'arrête, par exemple, en montée avec le pied sur la pédale de frein de repartir dans le sens inverse de celui de l'arrêt dès lors qu'il relâche le pied de la pédale de frein et après avoir "inversé" le sens du rapport de vitesse engagé. Ainsi, lorsque la pression de freinage PF exercée préalablement par le conducteur sur la pédale de frein est suffisante, c'est-à-dire supérieure à une pression de freinage de consigne PFC comme représenté en figure 6A, après engagement du rapport de vitesse dans le sens de la descente à l'instant T1, le dispositif de pilotage 15 commande le dispositif de freinage statique 7 de manière à diminuer progressivement la pression de freinage du véhicule et dès relâchement par le conducteur de la pédale de frein à l'instant T2 le véhicule peut partir en descente.

Les figures 7A et 7B illustrent le départ en descente du véhicule avec tout d'abord une pression de frein insuffisante exercée par le conducteur, puis une pression de frein suffisante avant relâchement par le conducteur de la pédale de frein. La figure 7A montre ainsi que la pédale de frein du véhicule a été préalablement enfoncée pendant un certain temps en dessous de la pression de frein de consigne PFC alors que le rapport de vitesse dans le sens de la descente a été engagé au temps T1, puis la pression exercée sur la pédale de frein est augmentée jusqu'à une valeur à laquelle le conducteur relâche la pédale de frein comme symbolisé par la courbe de pression de frein PF. A l'instant T2 auquel la pression de freinage PF atteint la pression de consigne PFC, le dispositif de pilotage 15 commande le dispositif de freinage statique 7 pour diminuer progressivement la pression de freinage, par ce dispositif, du véhicule et dès que le conducteur a relâché la pédale de frein au temps T3, le véhicule peut alors repartir en descente à la vitesse V.

On autorise le départ en descente du véhicule par l'action sur la pédale de frein seulement si la pression de freinage obtenue par cette action est supérieure ou égale à la pression de freinage nécessaire pour garantir l'arrêt du véhicule; le contrôle de la descente se faisant ensuite normalement par la pédale de frein (figures 7A et 7B).

Les figures 8A et 8B représentent la situation suivant laquelle le départ en descente du véhicule ne peut avoir lieu du fait que la pression de freinage exercée par le conducteur sur la pédale de frein est insuffisante. En effet, si la pression de freinage PF est constamment en-dessous de la pression de consigne PFC avant relâchement de la pédale de frein, malgré l'engagement au temps T1 du rapport de vitesse dans le sens de la descente, le véhicule est maintenu à l'arrêt dans cette descente par le dispositif de pilotage 15 qui commande le dispositif de freinage statique 7 pour qu'il maintienne la pression de freinage du véhicule, même après relâchement de la pédale de frein.

Selon l'invention le véhicule est équipé d'une boîte de vitesses manuelle et il est nécessaire de distinguer le cas d'accélération à vide du véhicule des cas d'accélération sous charge de celui-ci de manière à éviter de débloquer le véhicule, par commande du dispositif de freinage statique dans le sens du desserrage des freins, sur de petits coups d'accélérateur sur la pédale d'accélérateur par le conducteur.

A cet effet, le dispositif de pilotage 15 est programme, selon l'invention, pour calculer, lors d'une accélération, la différence d'une part entre la différence entre le régime moteur et le régime moteur à l'instant où le couple moteur du véhicule augmente et d'autre part l'intégrale de ce couple moteur, affectée d'un coefficient multiplicatif (il s'agit ainsi de déterminer le régime à vide théorique qu'aurait le moteur connaissant le couple moteur). Si cette différence est faible, le système considère alors que le moteur, lors d'une accélération, fonctionne à vide et, dans ces conditions, le dispositif de pilotage 15 ne commandera pas le dispositif de freinage statique dans le sens du desserrage des freins du véhicule. Dans le cas contraire, le système considère que le moteur est accéléré sous charge, ce qui permet au dispositif de pilotage 15 de commander le dispositif de freinage statique dans le sens du desserrage des freins du véhicule.

Dans cette application à la boîte de vitesses manuelle, il sera alors nécessaire d'ajouter un capteur de point mort en plus du capteur de marche arrière du véhicule afin d'en déduire le sens du rapport engagé, positif, négatif ou neutre.

Toujours dans le cadre de la gestion du véhicule équipé d'une boîte de vitesses manuelle par le dispositif de pilotage 15, lors d'un départ en montée du véhicule, la libération progressive du frein de stationnement par commande du dispositif de freinage statique peut être réalisée lorsque le couple moteur du véhicule croît en fonction d'une information fournie par au moins un capteur de débattement de suspension d'une roue du véhicule.

Par ailleurs, sur la majorité des trains de véhicules automobiles, il existe un genre de "couplage" longitudinal-vertical, en particulier sur les trains arrières à bras tirés avec ou sans traverses déformables, occasionnant une levée de l'avant du véhicule lors de la montée du couple moteur par enfoncement de la pédale d'accélérateur avec les freins serrés. Dans le cas présent, pour un véhicule à traction avant avec un dispositif de freinage statique sur le train arrière du véhicule, la montée du couple moteur appliqué au train avant va soulager le freinage du train arrière et agir sur la suspension dans un sens d'affaissement tant que le frein ne sera pas lâché. Dans ces conditions, il s'agit par au moins un capteur de déplacement relatif d'une roue arrière par rapport à la caisse du véhicule de permettre au dispositif de pilotage 15 de détecter l'instant où le couple moteur atteint une valeur suffisante pour maintenir le véhicule à l'arrêt dès désactivation du dispositif de freinage statique 7, puis propulser le véhicule.

Dans les expressions utilisées ci-dessus concernant la montée, il s'agit aussi bien d'un véhicule se déplaçant en marche avant dans le sens de la montée que d'un véhicule se déplaçant en marche arrière dans le sens de cette montée et par descente, il s'agit aussi bien d'un véhicule se déplaçant en marche avant dans le sens de la descente que d'un véhicule se déplaçant en marche arrière dans le sens de cette descente.

Le système ci-dessus décrit de l'invention est très intuitif et ne nécessite aucun apprentissage de la part du conducteur. En outre, il assure un départ sans recul en côte quelle que soit la pente avec, si nécessaire, le départ du véhicule assisté par le dispositif de freinage dynamique.

## Revendications

1. Procédé de gestion de l'état et du fonctionnement d'un véhicule automobile équipé d'une boîte de vitesses manuelle et comprenant un dispositif de freinage statique et un dispositif de freinage dynamique, consistant, pour faire repartir le véhicule en montée alors qu'il est immobilisé à l'arrêt par activation du dispositif de freinage statique, à désactiver le dispositif de freinage statique pour diminuer progressivement la pression de freinage du véhicule dès enfoncement de la pédale d'accélérateur et au fur et à mesure que le couple moteur augmente jusqu'à atteindre une valeur permettant au véhicule de repartir sans recul, et en ce qu'il consiste à calculer, lors d'une accélération, une différence entre d'une part la différence entre le régime moteur et le régime moteur à l'instant où le couple moteur augmente et d'autre part l'intégrale du couple moteur affectée, le cas échéant, d'un coefficient multiplicatif, et, si cette différence calculée est relativement faible, à maintenir actif le dispositif de freinage statique du véhicule, et, dans le cas contraire, à le désactiver.

2. Procédé selon la revendication 1, **caractérisé en ce qu'**il consiste, dans le cas d'un départ en montée du véhicule, à réaliser la désactivation du dispositif de freinage statique pour diminuer progressivement la pression de freinage du véhicule lorsque le couple moteur croît en fonction d'une information fournie par au moins un capteur de débattement de suspension de roue du véhicule.

3. Procédé selon la revendication 1, **caractérisé en ce qu'**il consiste, pour un véhicule à traction avant avec le dispositif de freinage statique agissant sur les roues du train arrière du véhicule, à détecter par au moins un capteur de déplacement relatif d'une roue arrière par rapport à la caisse du véhicule l'instant où le couple moteur du véhicule atteint une valeur suffisante pour maintenir le véhicule à l'arrêt dès désactivation du dispositif de freinage statique puis propulser le véhicule.

## Claims

1. A method for managing the condition and operation of a motor vehicle equipped with a manual gear box and comprising a static braking device and a dynamic braking device, consisting, in order to restart the vehicle on an uphill slope when it is immobilized at a halt by actuating the static braking device, of disabling the static braking device in order to gradually reduce the braking pressure of the vehicle as soon as the accelerator pedal is pushed down and as the engine torque gradually increases until it reaches a value allowing the vehicle to move on again without moving back, and in that it consists of computing, during an acceleration, a difference between the difference between the engine speed and the engine speed when the engine torque increases on the one hand and the integral of the engine speed if necessary modified by a multiplicative coefficient on the other hand, and, if this computed difference is relatively small, of maintaining active the static braking device of the vehicle, and, in the opposite case, of disabling it.

2. The method according to claim 1, **characterized in that** it consists, in the case of starting the vehicle on an uphill slope, of achieving disabling of the static braking device in order to gradually reduce the braking pressure of the vehicle when the engine torque increases according to information provided by at least one sensor sensing travel of the wheel suspension of the vehicle.

3. The method according to claim 1, **characterized in that** it consists, for a front wheel drive vehicle with the static braking device acting on the wheels of the rear end of the vehicle, of detecting with at least one sensor for sensing the relative displacement of a rear wheel with respect to the body of the vehicle, the moment when the engine torque of the vehicle reaches a sufficient value in order to maintain the vehicle at a halt as soon as the static braking device is disabled and then for propelling the vehicle.

## Patentansprüche

1. Verfahren zur Steuerung des Zustands und der Funktion eines mit einem manuellen Getriebe ausgestatteten und eine statische Bremsvorrichtung und eine dynamische Bremsvorrichtung umfassenden Kraftfahrzeugs, das, um das Fahrzeug an einer Steigung anfahren zu lassen, wenn es durch Aktivierung der statischen Bremsvorrichtung hält, darin besteht, die statische Bremsvorrichtung zu deaktivieren, um schrittweise den Bremsdruck des Fahrzeugs ab Herunterdrücken des Gaspedals und mit zunehmendem Motordrehmoment bis zum Erreichen eines Werts, der es dem Fahrzeug erlaubt, ohne Rücklauf anzufahren, zu verringern, und darin, dass es darin besteht, bei einer Beschleunigung eine Differenz zwischen einerseits der Differenz zwischen der Motordrehzahl und der Motordrehzahl in dem Augenblick, in dem das Motordrehmoment ansteigt, und andererseits dem anliegenden Integral der Motordrehzahl, ggf. eines multiplikativen Koeffizienten, zu berechnen, und, wenn diese berechnete Differenz relativ klein ist, die statische Bremsvorrichtung des Fahrzeugs aktiv zu halten und sie im gegenteiligen Fall zu deaktivieren.

2. Verfahren nach Anspruch 1, **dadurch gekennzeichnet, dass** es darin besteht, beim Anfahren an einer Steigung des Kraftfahrzeugs die Deaktivierung der statischen Bremsvorrichtung durchzuführen, um den Bremsdruck des Fahrzeugs schrittweise zu verringern, wenn das Motordrehmoment in Abhängigkeit einer Information, die von mindestens einem Sensor des Federwegs des Rades des Fahrzeugs bereitgestellt wird, ansteigt.

3. Verfahren nach Anspruch 1, **dadurch gekennzeichnet, dass** es darin besteht, für ein Fahrzeug mit Vorderradantrieb mit der auf die Räder des hinteren Fahrgestells des Fahrzeugs einwirkenden statischen Bremsvorrichtung mit mindestens einem Wegmesser relativ zu einem Hinterrad in Bezug zum Fahrzeugkasten den Augenblick festzustellen, in dem das Motordrehmoment des Fahrzeugs einen Wert erreicht, der ausreichend ist, um das Fahrzeug ab Deaktivierung der statischen Bremsvorrichtung in Haltestellung zu halten und danach das Fahrzeug anzutreiben.
